# EUROPÄISCHE PATENTSCHRIFT

(11) **EP 2 103 506 B1**
(45) Veröffentlichungstag und Bekanntmachung des Hinweises auf die Patenterteilung: **29.06.2011**
(21) Anmeldenummer: 09002041.3
(22) Anmeldetag: 13.02.2009
(51) Int. Cl.: B62D 33/06, B62D 51/02, B60N 2/24

(54) **Flurförderzeug**
Industrial truck
Chariot de manutention

(30) Priorität: 17.03.2008 DE 102008014642
(43) Veröffentlichungstag der Anmeldung: 23.09.2009
(73) Patentinhaber: Linde Material Handling GmbH, 63743 Aschaffenburg (DE)
(72) Erfinder: Proust, Freddy, 86230 Serigny (FR); Aucouturier, Vincent, 86100 Chatellerault (FR)
(74) Vertreter: Geirhos, Johann

(56) Entgegenhaltungen:
- EP-A1- 0 466 065
- EP-A1- 1 205 427
- WO-A1-97/20705
- WO-A2-2007/092773
- DE-A1- 4 313 029
- US-A- 3 442 552

## Beschreibung

Die Erfindung betrifft ein Flurförderzeug, insbesondere Lagertechnikgerät, mit einem Rahmen und einem eine Fahrerstandplattform umfassenden Fahrerarbeitsplatz, wobei der Fahrerarbeitsplatz am Rahmen mittels mindestens eines als Gummifederelement ausgebildeten Feder- und/oder Dämpferelements gefedert und/oder gedämpft gelagert ist.

Aus der WO 96/24519 ist ein Flurförderzeug mit einem eine Fahrerstandplattform und eine Bedieneinrichtung umfassenden Fahrerstand bekannt, der an einem Rahmen des Flurförderzeugs mittels Dämpfungselementen elastisch gelagert ist. Während des Betriebs des Flurförderzeugs steht eine Bedienperson auf der Fahrerstandplattform. Mittels der Dämpfungselemente können hierbei die während des Betriebs des Flurförderzeugs, das in der Regel ungefedert ist, auftretende Fahrbahnstöße gedämpft werden und somit die Belastungen der Bedienperson verringert werden.

Die Dämpfungselemente erlauben hierbei eine Bewegung des Fahrerstandes in vertikaler Richtung und in horizontaler Richtung. Bei der aus der WO 96/24519 bekannten Ausführung und Anordnung der Dämpfungselemente kann jedoch ein Kippen des Fahrerarbeitsplatzes um eine horizontale Querachse, ein Gieren des Fahrerarbeitsplatzes um eine vertikale Hochachse und ein Rollen des Fahrerarbeitsplatzes um eine horizontale Längsachse nicht wirksam gedämpft werden. Zudem ist eine Anpassung an das Gewicht einer Bedienperson nicht vorgesehen.

Die EP 1 205 427 A1 offenbart ein gattungsgemäßes Flurförderzeug mit einer Fahrerstandplattform und einem Fahrzeugrahmen. Die Fahrerstandplattform ist mittels eines aus zwei Kreuzstreben, die jeweils aus zwei gelenkig miteinander verbundenen Stangen besteht, gebildeten Führungsmittels in vertikaler Richtung verstellbar am Rahmen angeordnet. Zur Federung der Fahrerstandplattform sind zwei Federelemente vorgesehen, die jeweils aus einer auf Torsion beanspruchten Feder-Dämpfer-Einheit und einem Hebel bestehen, wobei mit dem Hebel die Feder-Dämpfer-Einheit betätigbar ist. Der Hebel steht mit einem ersten Ende mit der Feder-Dämpfer-Einheit zu dessen Betätigung in Verbindung. Das zweite Ende des Hebels stütz sich mittels einer Rolle an der Unterseite der Fahrerstandplattform ab. Die Feder-Dämpfer-Einheiten weist gummi-elastische Bauteile.

Die WO 2007/092773 A2 offenbart ein Flurförderzeug mit einem eine Fahrerstandplattform aufweisenden Fahrerarbeitsplatz. An einer hinteren Wand des Fahrerarbeitsplatzes ist eine Rückenlehne mit zwei seitlichen Haltepolstern angeordnet. An einer vorderen Wand des Fahrerarbeitsplatzes sind Kniepolster angeordnet. Die Rückenlehne sowie die Kniepolster können aus einem Polymer bestehen.

Der vorliegenden Erfindung liegt die Aufgabe zugrunde, ein Flurförderzeug der eingangs genannten Gattung zur Verfügung zu stellen, das hinsichtlich des Komforts für die Bedienperson verbessert ist.

Diese Aufgabe wird erfindungsgemäß dadurch gelöst, dass das als Gummifederelement ausgebildete Feder- und/oder Dämpferelement in vertikaler Richtung gegenüber der Vertikalen geneigt angeordnet ist und in horizontaler Richtung nach Innen weisend gegenüber einer Fahrzeuglängsachse geneigt angeordnet ist. Durch die gegenüber einer vertikalen Ebene geneigte Anordnung der Feder- und/oder Dämpferelemente werden die Feder- und/oder Dämpferelemente auf Druck und auf Schub beansprucht. Durch eine Veränderung des Winkels des Feder- und/oder Dämpferelements gegenüber der vertikalen Ebene kann somit die Steifigkeit des Feder- und/oder Dämpferelements in vertikaler Richtung auf einfache Weise verändert und beispielsweise an unterschiedliche Gewichte der Bedienperson angepasst werden. Durch die erfindungsgemäße Anordnung der Feder- und/oder Dämpferelemente ist somit auf einfache Weise und mit geringem Bauaufwand eine Verbesserung des Komforts für die auf dem Fahrerarbeitsplatz befindliche Bedienperson erzielbar. Die Feder- und/oder Dämpferelemente sind als Gummifederelemente ausgebildet. Mit Gummifederelementen können mit geringem Bauaufwand druck- und schubbelastete Feder- und/oder Dämpferelemente zur Verfügung gestellt werden, wodurch sich für die erfindungsgemäße Lagerung des Fahrerarbeitsplatzes ein geringer Bauaufwand ergibt.

Gemäß einer Ausführungsform der Erfindung ist zur Lagerung des Fahrerarbeitsplatzes am Rahmen eine Dreipunktlagerung mit drei Feder- und/oder Dämpferelementen vorgesehen. Hierdurch ist mit geringem Bauaufwand eine statische bestimmte gefederte Lagerung des Fahrerarbeitsplatzes erzielbar.

Besondere Vorteile ergeben sich, wenn gemäß einer Ausführungsform der Erfindung zur Lagerung des Fahrerarbeitsplatzes am Rahmen eine Vierpunktlagerung mit vier Feder- und/oder Dämpferelementen vorgesehen ist. Eine Vierpunktlagerung ermöglicht neben einer Dämpfung bzw. Federung des Fahrerarbeitsplatzes in vertikaler Richtung, in Fahrzeuglängsrichtung sowie in Fahrzeugquerrichtung weiterhin eine Dämpfung des Kippens des Fahrerarbeitsplatzes um eine horizontale Querachse, eine Dämpfung des Gierens des Fahrerarbeitsplatzes um eine vertikale Hochachse und eine Dämpfung des Rollens des Fahrerarbeitsplatzes um eine horizontale Längsachse. Hierdurch ist ein hoher Komfort für die auf dem Fahrerarbeitsplatz befindliche Bedienperson und eine Verringerung der auf die Bedienperson einwirkenden Stoß- und Schwingungsbelastungen auf einfache Weise erzielbar.

Gemäß einer Ausgestaltungsform der Erfindung sind hierbei mindestens zwei Feder- und/oder Dämpferelement vorgesehen, die in Fahrzeuglängsrichtung beabstandet sind, wobei die Feder- und/oder Dämpferelement zueinander in einer vertikalen Ebene einen Winkel im Bereich von 10° bis 90° einschließen. Durch eine Einstellung des Winkels der beiden in Fahrzeuglängsrichtung beabstandeten Feder- und/oder Dämpferelement in der vertikalen Ebene zueinander kann die Steifigkeit der Feder- und/oder Dämpferelemente in vertikaler Richtung verändert werden, wodurch auf einfache Weise eine Anpassung der Dämpfungs- und Federungseigenschaften an unterschiedliche Gewichte der Bedienperson und eine Einstellung der Dämpfung des Fahrerarbeitsplatzes hinsichtlich des Kippens um die horizontale Querachse erzielbar ist.

Besondere Vorteile sind erzielbar, wenn gemäß einer Weiterbildung der Erfindung die Feder- und/oder Dämpferelemente in horizontaler Richtung geneigt angeordnet sind und mindestens zwei Feder- und/oder Dämpferelement vorgesehen sind, die in Fahrzeugquerrichtung beabstandet sind, wobei die Feder- und/oder Dämpferelemente zueinander in einer horizontalen Ebene einen Winkel im Bereich von 10° bis 90° einschließen. Durch die Einstellung des Winkels der in Fahrzeugquerrichtung beabstandeten Feder- und/oder Dämpferelemente zueinander in der horizontalen Ebene kann die Federung und Dämpfung des Fahrerarbeitsplatzes in Längsrichtung und Querrichtung sowie das Gieren um die vertikale Hochachse sowie das Rollen um die horizontale Längsachse eingestellt und angepasst werden.

Hinsichtlich eines geringen Bauaufwandes ergeben sich Vorteile, wenn gemäß einer Ausgestaltungsform der Erfindung der Fahrerarbeitsplatz eine Vorderwand und eine in Fahrzeuglängsrichtung beabstandete Rückwand aufweist, wobei zwischen der Vorderwand und dem Rahmen zwei in Fahrzeugquerrichtung beabstandete Feder- und/oder Dämpferelemente und zwischen der Rückwand und dem Rahmen zwei in Fahrzeugquerrichtung beabstandete Feder- und/oder Dämpferelemente angeordnet sind. Durch eine derartige Anordnung der Feder- und/oder Dämpferelemente zwischen dem Rahmen und einer im Wesentlichen vertikalen Vorderwand sowie einer im Wesentlichen vertikalen Rückwand des Fahrerarbeitsplatzes kann eine Vierpunktlagerung des Fahrerarbeitsplatzes mit geringem Bauaufwand und geringem Bauraumbedarf erzielt werden.

Gemäß einer bevorzugten Weiterbildung der Erfindung sind die Feder- und/oder Dämpferelemente im vertikal oberen Bereich des Fahrerarbeitsplatzes angeordnet. Die Feder- und/oder Dämpferelemente sind somit im Bereich des Gesamtschwerpunktes des Fahrerarbeitsplatzes und der darauf befindlichen Bedienperson angeordnet, wodurch sich kleine Bewegungsauslenkungen des Fahrerarbeitsplatzes insbesondere aufgrund der Massenträgheit ergeben, die sich Komfort erhöhend auswirken.

Die Feder- und/oder Dämpferelemente sind zweckmäßigerweise an dem Rahmen befestigt, wobei der Fahrerarbeitsplatz mit Aufnahmen für die Feder- und/oder Dämpferelemente versehen ist. Hierdurch ist eine einfache Anordnung der Feder- und/oder Dämpferelemente zwischen dem Fahrerarbeitsplatz und dem Rahmen erzielbar.

Sofern der Winkel der Feder- und/oder Dämpferelemente in der vertikalen Ebene und/oder der Winkel der Feder- und/oder Dämpferelemente in der horizontalen Ebene verstellbar ist, kann das Feder- und Dämpfungsverhalten des Fahrerarbeitsplatzes auf einfache Weise angepasst und an unterschiedliche Gewichte der Bedienperson angepasst werden.

Sofern die Feder- und/oder Dämpferelemente bei einer Druckbelastung eine höhere Steifigkeit als bei einer Scherungsbelastung aufweisen, kann durch die Einstellbarkeit der Winkel der Feder- und/oder Dämpferelemente in der vertikalen Ebene sowie in der horizontalen Ebene das Dämpfungs- und Federungsverhalten des Fahrerarbeitsplatzes auf einfache Weise eingestellt werden.

Gemäß einer Weiterbildung der Erfindung ist der Fahrerarbeitsplatz als Fahrerstandplattform mit einer Bedieneinrichtung und/oder einer Anlehnhilfe ausgebildet. Die auf der Fahrerstandplattform stehende, die Bedieneinrichtung, beispielsweise eine Lenkeranordnung, mit den Händen betätigende und sich an der beispielsweise als Rückenpolster oder Stehsitz ausgebildeten Anlehnhilfe abstützende Bedienperson ist somit über den Fahrerstand vollständig von dem Rahmen schwingungstechnisch entkoppelt. Hierdurch wird die Bedienperson auf einfache Weise und mit geringem Bauaufwand von einwirkenden Fahrbahnstößen und Schwingungen entkoppelt, wodurch die auf die Bedienperson einwirkenden Belastungen wirksam verringert werden können und ein Flurförderzeug mit einem hohen Komfort für die Bedienperson erzielt werden kann.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Darstellung,
- Figur 2: das Flurförderzeug gemäß der Figur 1 in einer Seitenansicht und
- Figur 3: das Flurförderzeug gemäß den Figuren 1 und 2 in einer Draufsicht.

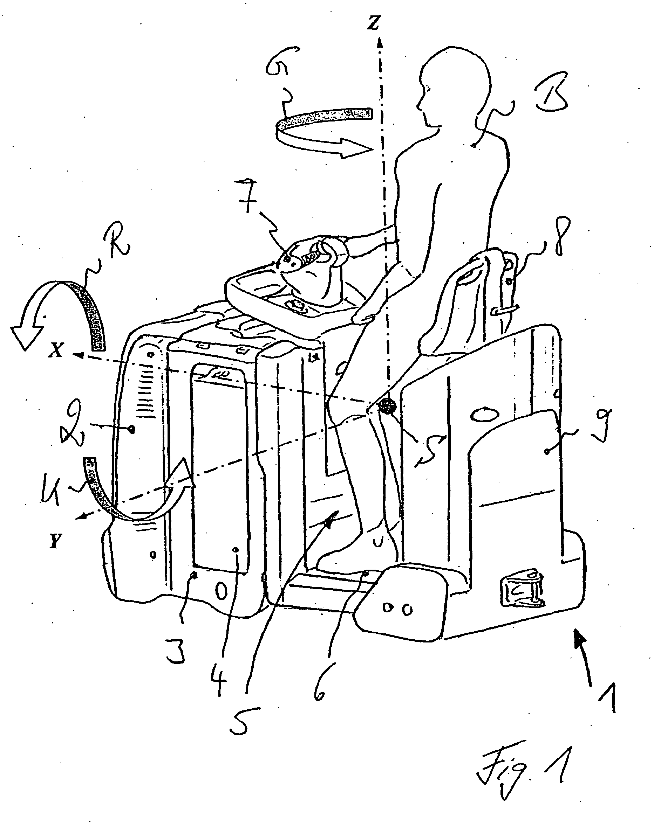

Die Figur 1 zeigt ein erfindungsgemäßes als Lagertechnikgerät ausgebildetes Flurförderzeug 1 in einer Seitenansicht. Das Flurförderzeug 1 weist in Fahrtrichtung gesehen einen frontseitigen Antriebssteil 2 auf, in welchem sich beispielsweise ein nicht mehr dargestelltes lenkbares Antriebsrad, ein elektrischer FahranViebsmotor, eine Betriebsbremse und eine Leistungselektronikeinheit befinden.

Angrenzend an den Antriebsteil 2 ist ein Batteriefach 3 mit einem darin angeordneten Batterieblock 4 ausgebildet. An das Batteriefach 3 grenzt ein Fahrerarbeitsplatz 5 an, der eine Fahrerstandplattform 6 für eine stehende Bedienperson B und eine lenkerähnliche Bedienanordnung 7 aufweist, mittels der die Lenkung und der Fahrantrieb des Schleppers 1 gesteuert werden kann. Der Fahrerarbeitsplatz 5 umfasst weiterhin eine beispielsweise als Stehsitz ausgebildete Anlehnhilfe 8. Die Anlehnhilfe 8 kann hierbei höhenverstellbar an dem Fahrerarbeitsplatz 5 angeordnet sein. Insbesondere während des Fahrens kann sich die Bedienperson B an der Anlehnhilfe 8 anlehnen und einen Teil ihrer Gewichtskraft an der Anlehnhilfe 8 abstützen. Dies verhindert ein schnelles Ermüden der Bedienperson B und gewährleistet darüber hinaus einen sicheren Stand der Bedienperson B auf der Fahrerstandplattform 5. Angrenzend an den Fahrerarbeitsplatz 5 ist das Flurförderzeug 1 mit einer vertikalen Rahmenwand 9 versehen.

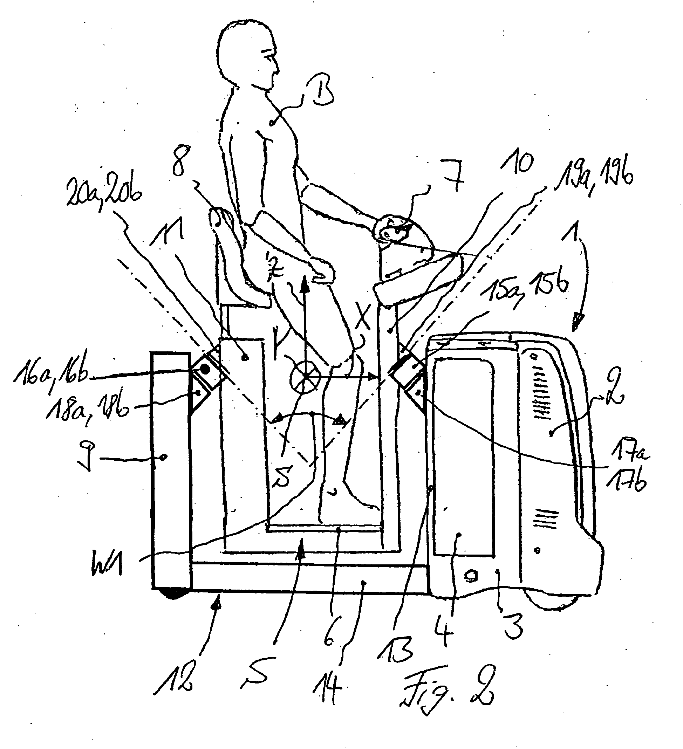

Der Fahrerarbeitsplatz 5 weist - wie aus der Figur 2 ersichtlich ist - eine im Wesentlichen vertikale Vorderwand 10 auf, an der die Bedienanordnung 7 befestigt ist, und eine im Wesentliche vertikale Rückwand 11 auf, an der die Anlehnhilfe 8 angeordnet. Zwischen der Vorderwand 10 und der Rückwand 11 ist die Fahrerstandplattform 6 angeordnet. Das Flurförderzeug 1 weist einen tragenden Rahmen 12 auf, der von der vertikalen Rahmenwand 9, einer im Bereich des Batteriefachs 3 angeordneten vertikalen Rahmenwand 13 und zumindest einem die Rahmenwand 13 mit der Rahmenwand 9 verbindenden Längsträger 14 gebildet ist.

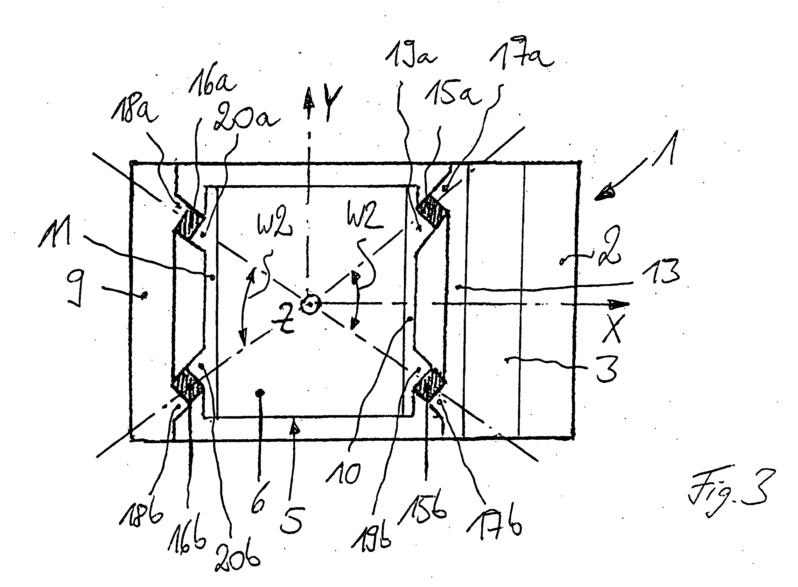

Erfindungsgemäß ist der Fahrerarbeitsplatz 5 - wie in der Figur 3 dargestellt ist - am Rahmen 12 mittels einer von vier Feder- und/oder Dämpferelementen 15a, 15b, 16a, 16b gebildeten Vierpunktlagerung gefedert und gedämpft gelagert. Die Feder- und/oder Dämpferelemente 15a, 15b sind hierbei in Fahrzeugquerrichtung (Achse Y) voneinander beabstandet und zwischen der Vorderwand 10 des Fahrerarbeitsplatzes 5 und der Rahmenwand 13 des Rahmens 12 angeordnet. Die Feder- und/oder Dämpferelemente 16a, 16b sind von den Feder- und/oder Dämpferelementen 15a, 15b in Fahrzeuglängsrichtung (Achse X) beabstandet und ebenfalls in Fahrzeugquerrichtung (Achse Y) voneinander beabstandet, wobei die Feder- und/oder Dämpferelemente 16a, 16b zwischen der Rückwand 11 des Fahrerarbeitsplatzes 5 und der Rahmenwand 9 des Rahmens 12 angeordnet sind.

Die Feder- und/oder Dämpferelemente 15a, 15b und 16a, 16b sind hierbei jeweils in vertikaler Richtung geneigt. Die Feder- und/oder Dämpferelemente 15a, 15b sind hierbei gegenüber der Vertikalen (Achse Z) in einem Bereich von 5° bis 45° nach hinten in Richtung des Fahrerarbeitsplatzes 5 geneigt. Die Feder- und/oder Dämpferelemente 16a, 16b sind entsprechend gegenüber der Vertikalen (Achse Z) in einem Bereich von 5° bis 45° nach vom in Richtung des Fahrerarbeitsplatzes 5 geneigt. Die voneinander in Fahrzeuglängsrichtung beabstandeten Feder- und/oder Dämpferelemente 15a, 16a und 15b, 16b schließen somit - wie aus der Figur 2 ersichtlich ist - in einer vertikalen Ebene, die von den Achsen X und Z aufgespannt ist, zueinander einen Winkel W1 im Bereich von 10° bis 90° ein.

Gemäß der Figur 3 sind die Feder- und/oder Dämpferelement 15a, 15b weiterhin in horizontaler Richtung geneigt, wobei die Feder- und/oder Dämpferelemente 15a und 15b jeweils nach Innen weisend gegenüber einer Fahrzeuglängsachse (Achse X) um einen Winkel im Bereich von 5° bis 45° geneigt angeordnet sind. Entsprechend sind die Feder- und/oder Dämpferelemente 16a, 16b in horizontaler Richtung geneigt und jeweils nach Innen weisend gegenüber einer Fahrzeuglängsachse (Achse X) um einen Winkel im Bereich von 5° bis 45° geneigt angeordnet. Die voneinander in Fahrzeugquerrichtung (Achse Y) beabstandeten Feder- und/oder Dämpferelemente 15a, 15b bzw. 16a, 16b schließen somit in einer horizontalen Ebene, die von den Achsen X und Y aufgespannt ist, jeweils einen Winkel W2 im Bereich von 10° bis 90° ein.

Die Feder- und/oder Dämpferelemente 15a, 15b und 16a, 16b sind hierbei - wie aus der Figur 2 zu erkennen ist- im vertikal oberen Bereich des Fahrerarbeitsplatzes 5 im Bereich der Höhe des Gesamtschwerpunktes S des Fahrerarbeitsplatzes 5 und der Bedienperson B angeordnet.

Im dargestellten Ausführungsbeispiel sind die voneinander in Fahrzeuglängsrichtung (Achse X) beabstandeten Feder- und/oder Dämpferelemente 15a, 16a und 15b, 16b gegenüber der Vertikalen (Achse Z) um 45° geneigt angeordnet, wodurch sich ein Winkel W1 von 90° ergibt. Gegenüber der Fahrzeuglängsachse (Achse X) sind die in Fahrzeugquerrichtung (Achse Y) voneinander beabstandeten Feder- und/oder Dämpferelemente 15a, 15b und 16a, 16b ebenfalls um 45° geneigt angeordnet, wodurch sich jeweils ein Winkel W2 von 90° ergibt. In Fahrzeuglängsrichtung (Achse X) sowie in Fahrzeugquerrichtung (Achse Y) sind durch die auf Druck und Schub beanspruchten Feder- und/oder Dämpferelemente 15a, 15b, 16a, 16b somit im Wesentlichen identische Federungs- und Dämpfungseigenschaften des Fahrerarbeitsplatzes 5 erzielbar.

Die Feder- und/oder Dämpferelemente 15a, 15b bzw. 16a, 16b sind hierbei an entsprechenden Befestigungskonsolen 17a, 17b bzw. 18a, 18b angeordnet, wobei die Befestigungskonsolen 17a, 17b an der Rahmenwand 13 und die Befestigungskonsolen 18a, 18b an der Rahmenwand 9 angeordnet sind. An der Vorderwand 10 des Fahrerarbeitsplatzes 5 sind hierbei entsprechende Aufnahmen 19a, 19b für die Feder- und/oder Dämpferelemente 15a, 15b und an der Rückwand 11 des Fahrerarbeitsplatzes 5 entsprechende Aufnahmen 20a, 20b für die Feder- und/oder Dämpferelemente 16a, 16b ausgebildet.

Die Feder- und/oder Dämpferelemente 15a, 15b und 16a, 16b sind jeweils als Gummifederelemente ausgebildet, die bei einer Druckbelastung eine höhere Steifigkeit aufweisen als bei einer Schubbelastung.

Mit der erfindungsgemäßen Anordnung und Ausbildung der Feder- und/oder Dämpferelemente 15a, 15b und 16a, 16b kann eine Federung und Dämpfung des Fahrerarbeitsplatzes 5 in Fahrzeuglängsrichtung (Achse X), in Fahrzeugquerrichtung (Achse Y) und in vertikaler Richtung (Achse Z) erzielt werden. Zudem werden ein Gieren G des Fahrerarbeitsplatzes 5 um die vertikale Hochachse (Achse Z), ein Kippen K des Fahrerarbeitsplatzes 5 um die horizontale Querachse (Achse Y) und eine Rollen R des Fahrerarbeitsplatzes 5 um eine horizontale Längsachse (Achse X) wirkungsvoll gedämpft.

Zudem kann mittels der Feder- und/oder Dämpferelemente 15a, 15b und 16a, 16b und deren Anordnung die Federung und Dämpfung des Fahrerarbeitsplatzes 5 an unterschiedliche Gewichte der Bedienperson B angepasst werden, wobei die Steifigkeit in vertikaler Richtung (Achse Z) unabhängig von der Steifigkeit in der horizontalen Ebene (Achsen X und Y) verändert werden kann. Darüber hinaus ist durch die erfindungsgemäße Lagerung weiterhin eine automatische Anpassung der Position und der Lage des Fahrerarbeitsplatzes 5 im Rahmen 12 des Flurförderzeugs 1 erzielbar. Weiterhin ergeben sich geringe Bewegungsauslenkungen des Fahrerarbeitsplatzes 5 aufgrund der Massenträgheit.

Insgesamt wird somit ein Flurförderzeug 1 mit einem hohen Komfort für die Bedienperson B erzielt, bei dem die Bedienperson B im Betrieb geringen Stoßbelastungen und Schwingungen ausgesetzt ist.

Das erfindungsgemäße Flurförderzeug 1 kann hierbei - wie in der Figur 1 dargestellt ist - als Schlepper ausgebildet sein, wobei im Bereich der Rahmenwand 9 eine Anhängevorrichtung angeordnet st. Es ist jedoch ebenfalls möglich, das erfindungsgemäße Flurförderzeug als Niederhubkommissionierer oder als Kommissionierer auszubilden, wobei im Bereich der Rahmenwand ein Lastaufnahmemittel angeordnet ist.

## Patentansprüche

1. Flurförderzeug, insbesondere Lagertechnikgerät, mit einem Rahmen (12) und einem eine Fahrerstandplattform (6) umfassenden Fahrerarbeitsplatz (5), wobei der Fahrerarbeitsplatz (5) am Rahmen (12) mittels mindestens eines als Gummifederelement ausgebildeten Feder- und/oder Dämpferelements (15a; 15b; 16a; 16b) gefedert und/oder gedämpft gelagert ist, **dadurch gekennzeichnet, dass** das als Gummifederelement ausgebildete Feder- und/oder Dämpferelement (15a; 15b; 16a; 16b) in vertikaler Richtung (Achse Z) gegenüber der Vertikalen geneigt angeordnet ist und in horizontaler Richtung (Achse X) nach Innen weisend gegenüber einer Fahrzeuglängsachse (Achse X) geneigt angeordnet ist.

2. Flurförderzeug nach Anspruch 1, **dadurch gekennzeichnet, dass** zur Lagerung des Fahrerarbeitsplatzes (5) am Rahmen (12) eine Dreipunktlagerung mit drei Feder- und/oder Dämpferelementen vorgesehen ist.

3. Flurförderzeug nach Anspruch 1, **dadurch gekennzeichnet, dass** zur Lagerung des Fahrerarbeitsplatzes (5) am Rahmen (12) eine Vierpunktlagerung mit vier Feder- und/oder Dämpferelementen (15a, 15b, 16a, 16b) vorgesehen ist.

4. Flurförderzeug nach einem der Ansprüche 1 bis 3, **dadurch gekennzeichnet, dass** mindestens zwei Feder- und/oder Dämpferelemente (15a, 16a; 15b, 16b) vorgesehen sind, die in Fahrzeuglängsrichtung (Achse X) beabstandet sind, wobei die Feder- und/oder Dämpferelemente (15a, 16a; 15b, 16b) zueinander in einer vertikalen Ebene (Achsen X, Z) einen Winkel (W1) im Bereich von 10° bis 90° einschließen.

5. Flurförderzeug nach einem der Ansprüche 1 bis 4, **dadurch gekennzeichnet, dass** mindestens zwei Feder- und/oder Dämpferelement (15a, 15b; 16a, 16b) vorgesehen sind, die in Fahrzeugquerrichtung (Achse Y) beabstandet sind, wobei die Feder- und/oder Dämpferelemente (15a, 15b; 16a, 16b) zueinander in einer horizontalen Ebene (Achsen X, Y) einen Winkel (W2) im Bereich von 10° bis 90° einschließen.

6. Flurförderzeug nach Anspruch 3 bis 5, **dadurch gekennzeichnet, dass** der Fahrerarbeitsplatz (5) eine Vorderwand (10) und eine in Fahrzeuglängsrichtung (Achse X) beabstandete Rückwand (11) aufweist, wobei zwischen der Vorderwand (10) und dem Rahmen (12) zwei in Fahrzeugquerrichtung (Achse Y) beabstandete Feder- und/oder Dämpferelement (15a, 15b) und zwischen der Rückwand (11) und dem Rahmen (12) zwei in Fahrzeugquerrichtung (Achse Y) beabstandete Feder- und/oder Dämpferelemente (16a, 16b) angeordnet sind.

7. Flurförderzeug nach einem der Ansprüche 1 bis 6, **dadurch gekennzeichnet, dass** die Feder- und/oder Dämpferelemente (15a, 15b; 16a, 16b) im vertikal oberen Bereich des Fahrerarbeitsplatzes (5) angeordnet sind.

8. Flurförderzeug nach einem der Ansprüche 1 bis 7, **dadurch gekennzeichnet, dass** die Feder- und/oder Dämpferelemente (15a, 15b; 16a, 16b) an dem Rahmen (12) befestigt sind, wobei der Fahrerarbeitsplatz (5) mit Aufnahmen (19a, 19b; 20a, 20b) für die Feder- und/oder Dämpferelemente (15a, 15b; 16a, 16b) versehen ist.

9. Flurförderzeug nach einem der Ansprüche 4 bis 8, **dadurch gekennzeichnet, dass** der Winkel (W1) der Feder- und/oder Dämpferelemente (15a, 15b; 16a, 16b) in der vertikalen Ebene (Achsen X, Z) einstellbar ist.

10. Flurförderzeug nach einem der Ansprüche 5 bis 9, **dadurch gekennzeichnet, dass** der Winkel (W2) der Feder- und/oder Dämpferelemente (15a, 15b; 16a, 16b) in der horizontaler Ebene (Achsen X, Y) einstellbar ist.

11. Flurförderzeug nach einem der Ansprüche 1 bis 10, **dadurch gekennzeichnet, dass** die Feder- und/oder Dämpferelemente (15a, 15b; 16a, 16b) bei einer Druckbelastung eine höhere Steifigkeit als bei einer Schubbelastung aufweisen.

12. Flurförderzeug nach einem der vorangegangenen Ansprüche, **dadurch gekennzeichnet, dass** der Fahrerarbeitsplatz (5) als Fahrerstandplattform (6) mit einer Bedieneinrichtung (7) und/oder einer Anlehnhilfe (8) ausgebildet ist.

## Claims

1. Industrial truck, in particular storage technology device, with a frame (12) and a driver's workstation (5) comprising a driver's standing platform (6), the driver's workstation (5) being mounted on the frame (12) in sprung and/or damped fashion by means of at least one spring and/or damper element (15a; 15b; 16a; 16b) in the form of a rubber spring element, **characterized in that** the spring and/or damper element (15a; 15b; 16a; 16b) in the form of a rubber spring element is arranged so as to be inclined in the vertical direction (axis Z) with respect to the vertical and is arranged so as to be inclined in the horizontal direction (axis X), pointing inwards, with respect to a vehicle longitudinal axis (axis X).

2. Industrial truck according to Claim 1, **characterized in that**, in order to mount the driver's workstation (5) on the frame (12), a three-point bearing arrangement with three spring and/or damper elements is provided.

3. Industrial truck according to Claim 1, **characterized in that**, in order to mount the driver's workstation (5) on the frame (12), a four-point bearing arrangement with four spring and/or damper elements (15a, 15b, 16a, 16b) is provided.

4. Industrial truck according to one of Claims 1 to 3, **characterized in that** at least two spring and/or damper elements (15a, 16a; 15b, 16b) are provided, which are spaced apart from one another in the vehicle longitudinal direction (axis X), the spring and/or damper elements (15a, 16a; 15b, 16b) enclosing an angle (W1) in the range of from 10° to 90° with respect to one another in a vertical plane (axes X, Z).

5. Industrial truck according to one of Claims 1 to 4, **characterized in that** at least two spring and/or damper elements (15a, 15b; 16a, 16b) are provided, which are spaced apart from one another in the vehicle transverse direction (axis Y), the spring and/or damper elements (15a, 15b; 16a, 16b) enclosing an angle (W2) in the range of from 10° to 90° with respect to one another in a horizontal plane (axes X, Y).

6. Industrial truck according to Claims 3 to 5, **characterized in that** the driver's workstation (5) has a front wall (10) and a rear wall (11), which is spaced apart in the vehicle longitudinal direction (axis X), with two spring and/or damper elements (15a, 15b), which are spaced apart in the vehicle transverse direction (axis Y), being arranged between the front wall (10) and the frame (12) and two spring and/or damper elements (16a, 16b), which are spaced apart in the vehicle transverse direction (axis Y), being arranged between the rear wall (11) and the frame (12).

7. Industrial truck according to one of Claims 1 to 6, **characterized in that** the spring and/or damper elements (15a, 15b; 16a, 16b) are arranged in the vertically upper region of the driver's workstation (5).

8. Industrial truck according to one of Claims 1 to 7, **characterized in that** the spring and/or damper elements (15a, 15b; 16a, 16b) are fixed to the frame (12), with the driver's workstation (5) being provided with receptacles (19a, 19b; 20a, 20b) for the spring and/or damper elements (15a, 15b; 16a, 16b).

9. Industrial truck according to one of Claims 4 to 8, **characterized in that** the angle (W1) of the spring and/or damper elements (15a, 15b; 16a, 16b) is adjustable in the vertical plane (axes X, Z).

10. Industrial truck according to one of Claims 5 to 9, **characterized in that** the angle (W2) of the spring and/or damper elements (15a, 15b; 16a, 16b) is adjustable in the horizontal plane (axes X, Y).

11. Industrial truck according to one of Claims 1 to 10, **characterized in that** the spring and/or damper elements (15a, 15b; 16a, 16b) have greater rigidity in the event of a compressive load than in the event of an axial load.

12. Industrial truck according to one of the preceding claims, **characterized in that** the driver's workstation (5) is in the form of a driver's standing platform (6) with an operating device (7) and/or a leaning aid (8).

## Revendications

1. Chariot de manutention, en particulier engin d'entreposage, comportant un châssis (12) et un poste de conduite (5) comprenant une plate-forme de conduite debout (6), dans lequel le poste de conduite (5) est monté sur le châssis (12) de façon suspendue et/ou amortie au moyen d'au moins un élément de suspension et/ou d'amortissement (15a; 15b; 16a; 16b) réalisé sous la forme d'un élément de ressort en caoutchouc, **caractérisé en ce que** l'élément de suspension et/ou d'amortissement (15a; 15b; 16a; 16b) réalisé sous la forme d'un élément de ressort en caoutchouc est disposé en direction verticale (axe Z) avec une inclinaison par rapport à la verticale et en direction horizontale (axe X) avec une inclinaison orientée vers l'intérieur par rapport à un axe longitudinal (axe X) du véhicule.

2. Chariot de manutention selon la revendication 1, **caractérisé en ce qu'**il est prévu un appui à trois points avec trois éléments de suspension et/ou d'amortissement pour l'appui du poste de conduite (5) sur le châssis (12).

3. Chariot de manutention selon la revendication 1, **caractérisé en ce qu'**il est prévu un appui à quatre points avec quatre éléments de suspension et/ou d'amortissement (15a, 15b, 16a, 16b) pour l'appui du poste de conduite (5) sur le châssis (12).

4. Chariot de manutention selon l'une quelconque des revendications 1 à 3, **caractérisé en ce qu'**il est prévu au moins deux éléments de suspension et/ou d'amortissement (15a, 16a; 15b, 16b), qui sont espacés l'un de l'autre dans la direction longitudinale du véhicule (axe X), dans lequel les éléments de suspension et/ou d'amortissement (15a, 16a; 15b, 16b) forment entre eux un angle (W1) compris dans la plage de 10° à 90° dans un plan vertical (axes X, Z).

5. Chariot de manutention selon l'une quelconque des revendications 1 à 4, **caractérisé en ce qu'**il est prévu au moins deux éléments de suspension et/ou d'amortissement (15a, 15b; 16a, 16b), qui sont espacés l'un de l'autre dans la direction transversale du véhicule (axe Y), dans lequel les éléments de suspension et/ou d'amortissement (15a, 15b; 16a, 16b) forment entre eux un angle (W2) compris dans la plage de 10° à 90° dans un plan horizontal (axes X, Y).

6. Chariot de manutention selon une revendication 3 à 5, **caractérisé en ce que** le poste de conduite (5) présente une paroi avant (10) et une paroi arrière (11) espacée de celle-ci dans la direction longitudinale du véhicule (axe X), dans lequel il se trouve entre la paroi avant (10) et le châssis (12) deux éléments de suspension et/ou d'amortissement (15a, 15b) espacés l'un de l'autre dans la direction transversale du véhicule (axe Y) et entre la paroi arrière (11) et le châssis (12) deux éléments de suspension et/ou d'amortissement (16a, 16b) espacés l'un de l'autre dans la direction transversale du véhicule (axe Y).

7. Chariot de manutention selon l'une quelconque des revendications 1 à 6, **caractérisé en ce que** les éléments de suspension et/ou d'amortissement (15a, 15b; 16a, 16b) sont disposés dans une région verticalement supérieure du poste de conduite (5).

8. Chariot de manutention selon l'une quelconque des revendications 1 à 7, **caractérisé en ce que** les éléments de suspension et/ou d'amortissement (15a, 15b; 16a, 16b) sont fixés au châssis (12), dans lequel le poste de conduite (5) est doté de logements (19a, 19b; 20a, 20b) pour les éléments de suspension et/ou d'amortissement (15a, 15b; 16a, 16b).

9. Chariot de manutention selon l'une quelconque des revendications 4 à 8, **caractérisé en ce que** l'angle (W1) des éléments de suspension et/ou d'amortissement (15a, 15b; 16a, 16b) dans le plan vertical (axes X, Z) est réglable.

10. Chariot de manutention selon l'une quelconque des revendications 5 à 9, **caractérisé en ce que** l'angle (W2) des éléments de suspension et/ou d'amortissement (15a, 15b; 16a, 16b) dans le plan horizontal (axes X, Y) est réglable.

11. Chariot de manutention selon l'une quelconque des revendications 1 à 10, **caractérisé en ce que** les éléments de suspension et/ou d'amortissement (15a, 15b; 16a, 16b) présentent une raideur plus élevée sous une charge de compression que sous une charge de cisaillement.

12. Chariot de manutention selon l'une quelconque des revendications précédentes, **caractérisé en ce que** le poste de conduite (5) est réalisé sous la forme d'une plate-forme de conduite debout (6) avec un dispositif de manoeuvre (7) et/ou un accessoire d'appui (8).
